# EUROPEAN PATENT APPLICATION

(11) **EP 0 922 390 A1**
(43) Date of publication of application: **16.06.1999**
(21) Application number: 98310021.5
(22) Date of filing: 07.12.1998
(51) Int. Cl.: A22C 13/00

(54) **Biaxially stretched seamed food casing**

(30) Priority: 12.12.1997 US 990124
(71) Applicant: Devro-Teepak Belgium, NV, 3920 Lommel (BE)
(72) Inventor: Beckers, Stefan, 3941 Eksel (BE); Hendriks, Ivo, 3900 Overpelt (BE); Vrijsen, Marc, 3520 Zonhoven (BE); Hendrixx, Roger, 3520 Zonhoven (BE)
(74) Representative: MacDougall, Donald Carmichael

(57) **Abstract**

A tubular food casing comprising a biaxially stretched elongated strip of plastic film having longitudinal edges, said film being curved about a longitudinal axis so that said edges are proximate each other to form a tube, said longitudinal edges being sealed together. Due to its unique properties, the plastic material is preferably a cellulose film from derivatized or non-derivatized cellulose; although, other plastic materials such as polyolefins, halogenated polyolefins and polyamides, such as nylon, can be used. The film is biaxially stretched by at least 10% in a longitudinal direction and at least 10% in a transverse direction, prior to forming the seam, in order to obtain the desired stretch, shrink and strength characteristics. The invention further includes a method for making the tubular food casing.

## Description

### Background of the Invention

This invention relates to tubular food casings such as those commonly used for encasing foods such as sausages.

Seamed tubular food casings have been known for some time. Such seamed tubular casings are, for example, described in U.S. Patents 4,396,039; 4,401,136; and 4,563,231. These tubular casings are fibre reinforced. Such casings have very low radial shrink properties thus resulting in a wrinkled appearance when the volume of encased material is reduced by drying or otherwise. U.S. Patent 4,556,708 describes a non-reinforced sausage casing which has certain minimal tear strengths in both longitudinal and transverse directions and minimal orientation. Such strengths are not as high as desired relative to their cross sectional areas and shrink and stretch properties are poor. U.S. Patent 4,940,614 similarly describes a tubular material seamed parallel to a longitudinal axis by means of an adhesive tape. Again the strength for cellulose based material is not as high as desired relative to cross sectional area and shrink and stretch properties are not as good as desired.

It would therefore be desirable to have a seamed tubular material suitable for use as a food casing which is capable of stretching to a uniform diameter when being filled and which will radially shrink to form a smooth wrinkle free product when encased food product becomes reduced in volume. Such a casing would furthermore have a good longitudinal stretch stability after being filled in that there is minimal longitudinal stretch or sag when the product is hung from one end.

### Brief Description of the Drawings

Fig 1 shows a perspective view of a seamed food casing of the invention;
Figs 2 and 3 show alternative forms of seamed food casings according to the invention.

### Brief Description of the Invention

The invention comprises a tubular food casing comprising a biaxially stretched elongated strip of plastic film having longitudinal edges, said film being curved about a longitudinal axis so that said edges are proximate each other to form a tube, said longitudinal edges being sealed together. Due to its unique properties, the plastic material is preferably a cellulose film from derivatized or non-derivatized cellulose; although, other plastic materials such as polyolefins, halogenated polyolefins and polyamides, such as nylon, can be used.

In general, the film is biaxially stretched by 10% to 1500% in a longitudinal direction and 10% to 2000% in a transverse direction, prior to forming the seam, in order to obtain the desired stretch, shrink and strength characteristics. The film is preferably biaxially stretched by from 20 to 50% in a longitudinal direction and from 20 to 50% in a transverse direction prior to formation of the seamed tube. The resulting tubular film is biaxially stretched by from 10% to 1500% in a longitudinal direction and from 10% to 2000% in a transverse or radial direction.

When the plastic material is a cellulose product, it may be regenerated from xanthate viscose, may be another derivatized cellulose such as alkylene oxide, aminomethanate, acetate, alkyl, alkoxy, propylenimine or propylene oxide derivatized cellulose or may be a non-derivatized cellulose precipitated from amine oxide solution.

The food casing may be seamed along longitudinal edges of the film directly by means of an adhesive or by heat sealing or may be seamed by using a tape which may be an adhesive or heat sealing tape.

The food casing, after formation, may be shirred, i.e. radially folded, to compress it along its longitudinal axis, or may be reeled and stored for use.

The invention also includes a method for the manufacture of a seamed tubular food casing which comprises:
forming a tubular film by extruding a solution of a cellulose product in a solvent;
precipitating cellulose from the solution;
biaxially stretching the resulting tubular film;
longitudinally slitting and said tubular film to form at least one elongated biaxially stretched cellulose strip having longitudinal edges;
   and
seaming said longitudinal edges to form a seamed tubular food casing.

The invention further includes a method of manufacturing an extruded article, comprising the steps of extruding a solution of a cellulose product in a solvent through an annular extrusion die having a diameter of at least 150mm and having an annular orifice of width in the range 50 to 2000 µm whereby to extrude a seamless tube; precipitating cellulose from the extruded tube; and logitudinally stretching and blowing the interior of the extruded tube so as biaxially to stretch the tube by at least 10% in both the longitudinal and transverse directions.

The extruded article in this case is seamless but is not a food casing due is its excessively large diameter. Food casings which do not have fibre reinforcement and are in the form of extruded tubular film typically have diameters in the range 30mm to 150mm.

The extruded article may be longitudinal slit and opened to form an elongate flat film which has a width of at least 500mm but depending upon the degree of biaxial stretch the flat film width may be as much as 12000mm. Either or both surfaces of the flat film may be surface coated.

The flat film may be slit longitudinally many times is parallel, typically at least four times, to form at least five narrow width flat films. The narrow width films may be longitudinally wrapped and seamed into a seamed tube which is of a size suitable for use as a food casing, for example of the order of 40mm or less in diameter. Alternatively the narrow width films may be formed into tubes contemporaneously with foodstuff filling.

Due to the biaxial stretch the thickness of the extruded article is typically in the range 5 to 100µm.

The flat film of width at least 500 mm may be coated on one surface with a layer of fibrous material laminate. This laminated film may then be slit longitudinally to form at least two narrow width flat films each of which can be wrapped and seamed. Such laminated seamed tubes may have a diameter of 200 mm or less and form fibrous coated food casings.

### Detailed Description of the Invention

The tubular film according to the invention may be made of essentially any plastic film material which can be oriented to increase strength characteristics and to incorporate elastic memory so that radial and longitudinal shrink characteristics can be obtained. Preferred materials in accordance with the invention are cellulosic film materials obtained by precipitating and regenerating a film of derivatized cellulose or by precipitating cellulose film from a solution of cellulose in a solvent such as an amine oxide. A preferred amine oxide solvent for cellulose is N-methylmorpholine-N-oxide (NMMO) . Derivatized cellulosic materials suitable for use in accordance with the present invention include CS₂ to form a xanthated cellulose which can be dissolved in sodium hydroxide to obtain xanthate viscose. Xanthate viscose may be extruded into a tubular film from which a cellulose tube may be regenerated by methods known to those skilled in the art or propylene oxide derivatized cellulose having a selectable percentage of substitution so as to preferentially obtain solubility, antimicrobial and flexibility characteristics.

The film used in accordance with the present invention usually has a film thickness of between about 5 and 100 µm(microns) .

The film of the invention is biaxially stretched prior to formation into a seamed tubular food casing. In preferred embodiments of the invention, the film is biaxially stretched by at least 10 percent in each of the longitudinal and transverse (radial) directions. Radial and longitudinal stretch ratios may range from about 1 to 10. The film is preferably stretched by from about 20% to about 1500% in the longitudinal direction and by from about 20% to about 2000% in the transverse direction and preferably stretched by from about 20% to about 600% in the longitudinal direction and by from about 20% to about 600% in the transverse direction. The stretch may be from 20% to 50% in both the longitudinal and transverse directions.

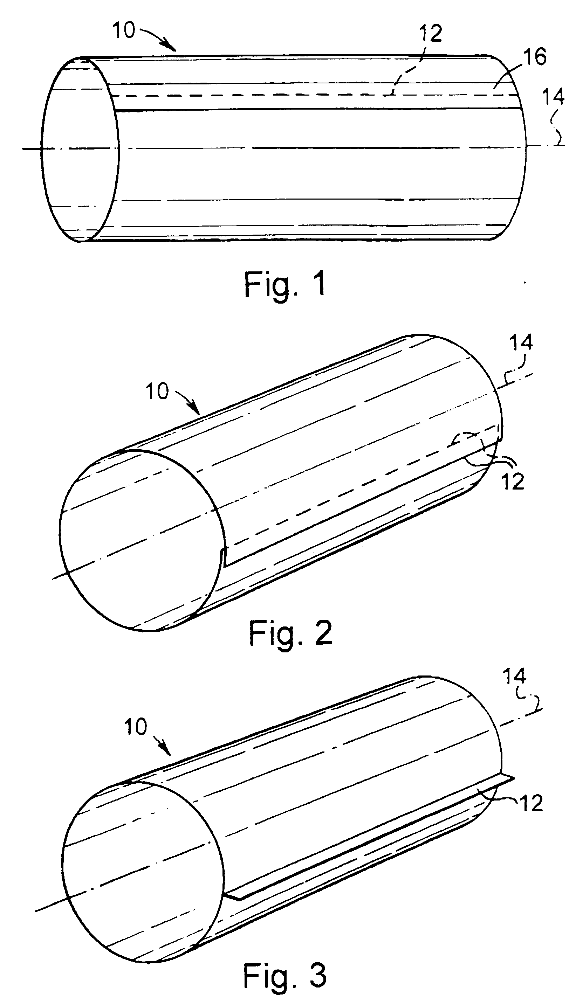

In a preferred embodiment a seamless tubular film is formed by extruding a tube of derivatized or non-derivatized cellulose which is inflated to obtain radial stretch and pulled in the direction of the longitudinal axis to obtain longitudinal stretch. The diameter of the extrusion die may, for example, vary from about 10 to about 300mm. In a preferred embodiment the tubular film is longitudinally stretched by means of rollers which move the formed film at a rate faster than the rate of extrusion and radially stretched by expansion with air. Stretch may be calculated from extrusion to dry casing including stretch before and after cellulose regeneration or precipitation. In the case of cellulose, stretch from regeneration or precipitation is usually about 1:1.5-1:4 radial and 1:1.1-1:4 longitudinal. After regeneration or solvent removal, the tube is dried. It can then be rolled for later slitting to form one or more elongated strips of cellulose film which is both longitudinally and transversely (radially) stretched. Optionally, after drying, the tube may be immediately slitted and then rolled onto reels. The seamless tubular film may be split into multiple longitudinal strips for the manufacture of multiple seamed food casings having a much smaller diameter than the original seamless tubular film. As shown in the drawings each strip of film has parallel longitudinal edges 12 which are curved toward each other about a longitudinal axis 14 so that the edges are proximate each other to form a tube 10. The edges 12 may abut (Fig 1) or overlap (Fig 2) or be face-to-face (Fig 3). The longitudinal edges are then sealed together either directly or by means of a sealing tape 16. When the edges 12 are sealed together in face-to-face (Fig 3) orientation the resultant seam protrudes generally radially from the resultant tube. The seal may be made by any suitable means or method such heat sealing or by an adhesive such as an acrylate adhesive, e.g. a methymethacrylate or a cyanoacrylate. When the seal is a heat seal, and the base film is a cellulose film, the film or tape is coated with a heat sealing polymeric material such as polyvinylidene chloride.

The finished seamed tubular food casing may be collected on a reel for later use directly in a food stuffing operation where lengths of food casing are radially folded and longitudinally compressed to form shirred sticks for placement over a food stuffing horn in a subsequent stuffing operation. A unique characteristic of the food casing of the invention is that it may be formed immediately prior to stuffing which permits a continuous food stuffing operation not obtainable with reel stock or shirred sticks.

It is to be understood that usual treatments may be applied to the casings of the invention either before formation of the seamed tube or subsequent to such formation. Examples of such treatments include peeling aids, anti-blocking agents, plasticizers, printing, colorants, such as food approval dyes or smoke, heat sealing coatings, flavourants, such as smoke, and vapour and moisture barrier coatings and laminations.

Tubular food casings of the present invention have been found to have strength characteristics as good as or better than unseamed casings having similar diameters and film thickness. Furthermore the seamed casings of the present invention, when properly biaxially stretched , have good dimensional stability both radially and longitudinal, even when stuffed with wet food product. The casings of the invention will radially shrink with contained food product as the food product dries and will retain a consistent longitudinal dimension even when a finished stuffed product is hung by one end of the casing

## Claims

1. A tubular food casing comprising a biaxially stretched elongated strip of cellulose film having longitudinal edges, said film being curved about a longitudinal axis so that said edges are proximate each other to form a tube, said longitudinal edges being sealed together.

2. The tubular food casing of Claim 1 wherein the film is biaxially stretched by at least 10% in a longitudinal direction and at least 10% in a transverse direction.

3. The tubular food casing of Claim 1 wherein the tubular film is biaxially stretched by from 20% to 1500% in a longitudinal direction and from 20% to 2000% in a transverse direction.

4. The tubular food casing of Claim 1 wherein the cellulose is a non-derivatized cellulose.

5. The tubular food casing of Claim 1 wherein the cellulose is regenerated from xanthate viscose.

6. The tubular food casing of Claim 1 wherein the cellulose is a derivatized cellulose.

7. The tubular film of Claim 5 wherein the film has a thickness of from 5 to 100µm.

8. The tubular food casing of Claim 1 wherein the food casing is in the form of a shirred stick.

9. The tubular food casing of Claim 1 wherein the edges are sealed to each other by means of an adhesive.

10. The tubular food casing of Claim 9 wherein the adhesive is a cyanoacrylate adhesive.

11. The tubular food casing of Claim 1 wherein the edges are sealed to each other by means of tape.

12. The tubular food casing of Claim 11 wherein the tape is heat sealing tape.

13. The tubular food casing of Claim 11 wherein the tape is an adhesive tape.

14. A method for the manufacture of a seamed tubular food casing which comprises:
forming a tubular film by extruding a solution of a cellulose product in a solvent;
precipitation cellulose from the solution;
biaxially stretching the resulting tubular film by at least 10% in a longitudinal direction and at least 10% in a transverse direction;
longitudinally slitting said tubular film to form at least one elongated biaxially stretched cellulose strip having longitudinal edges;
and
seaming said longitudinal edges to form a seamed tubular food casing.

15. The method of Claim 14 wherein the solution is a solution of non-derivatized cellulose in a solvent comprising an amine oxide.

16. The method of Claim 15 wherein the amine oxide is a solvent comprising NMMO.

17. The method of Claim 14 wherein the solution is a solution of derivatized cellulose in a solution comprising an amine oxide.

18. The method of Claim 14 wherein the solution is a solution of xanthated cellulose in a solution comprising sodium hydroxide and cellulose is precipitated by regenerating the cellulose.

19. The method of Claim 14 wherein the film is stretched by from 20% to 1500% in a transverse direction and by 20% to 2000% in a longitudinal direction.

20. The method of Claim 14 wherein a plurality of longitudinal slits are made to form a plurality of elongated biaxially stretched strips.

21. The method of Claim 14 wherein the longitudinal edges are seamed by means of an adhesive.

22. The method of Claim 14 wherein the longitudinal edges are seamed by means of a tape.

23. The method of Claim 22 wherein in tape is an adhesive tape.

24. The method of Claim 22 wherein the tape is heat sealing tape.

25. The method of Claim 14 wherein the tubular film is transversely stretched by inflating the tubular film.

26. The method of Claim 14 wherein the tubular film is longitudinal stretched by means of rollers which move the film at a rate faster than a rate of extrusion.

27. A method of manufacturing an extruded article comprising the steps of
extruding a solution of a cellulose product in a solvent through an annular extrusion die having a diameter of at least 150 mm and having an annular orifice of width in the range 50 to 2000 µm whereby to extrude a seamless tube;
precipitating cellulose from the extruded tube; and
longitudinally stretching and blowing the interior of the extruded tube so as biaxially to stretch the tube by at least 10% in both the longitudinal and transverse directions.

28. The method of claim 27 including the further step of longitudinally slitting and opening the biaxially stretched tube to form an elongate flat film having a width of at least 500 mm.

29. The method as claimed in claim 28, including the further step of applying a coating to at least one surface of the flat film.

30. The method as claimed in claim 29 wherein a first coating is applied to one surface of the flat film and a second different coating is applied to the other surface of the flat film.

31. The method as claimed in any one of claims 28 to 30 including the step of slitting the elongate flat film longitudinally at least four times in parallel so as to form at least five narrow width flat films.

32. The method as claimed in claim 31 wherein each narrow width flat film is longitudinally wrapped and seamed into a seamed tube which has a diameter of the order to 40 mm or less and thereby forms a food casing.

33. The method as claimed in claim 32 wherein the seam of the seamed tube is a raised seam.

34. The method as claimed in claim 29 or claim 30 wherein the or one coating is a layer of fibrous material laminated to a surface of the flat film.

35. The method as claimed in claim 34, including the step of slitting the elongate flat film longitudinally so as to form at least two narrow width flat films each of which is longitudinally wrapped and seamed into a seamed tube which has a diameter of 200 mm or less and thereby forms a fibrous coated food casing.
